Europäisches Patentamt

European Patent Office

Office européen des brevets

(11) Veröffentlichungsnummer : **0 034 138**
**B1**

(19)

(12) **EUROPÄISCHE PATENTSCHRIFT**

(45) Veröffentlichungstag der Patentschrift :
05.10.83

(51) Int. Cl.³ : **C 22 B 19/26**

(21) Anmeldenummer : **81890011.0**

(22) Anmeldetag : **22.01.81**

(54) **Verfahren zur hydrometallurgischen Aufarbeitung von Zink enthaltenden Rohmaterialien.**

(30) Priorität : **06.02.80 AT 656/80**

(43) Veröffentlichungstag der Anmeldung :
**19.08.81 Patentblatt 81/33**

(45) Bekanntmachung des Hinweises auf die Patenterteilung : **05.10.83 Patentblatt 83/40**

(84) Benannte Vertragsstaaten :
**BE CH DE FR GB IT LI LU NL SE**

(56) Entgegenhaltungen :
**DE A 1 948 411**
**DE A 2 708 059**
**DE A 2 835 113**
**FR A 2 203 882**
**FR A 2 217 427**
**FR A 2 338 997**
**US A 3 434 947**
**US A 3 464 814**
**US A 3 493 365**

(73) Patentinhaber : **VOEST-ALPINE Aktiengesellschaft**
**Friedrichstrasse 4**
**A-1011 Wien (AT)**

(72) Erfinder : **Reiterer, Hans Detlef Dr.**
**Sandgasse 47**
**A-8010 Graz (AT)**

(74) Vertreter : **Kretschmer, Adolf, Dipl.-Ing.**
**Schottengasse 3a**
**A-1014 Wien (AT)**

Verfahren zur hydrometallurgischen Aufarbeitung von Zink enthaltenden Rohmaterialien

Die Erfindung bezieht sich auf ein Verfahren zur hydrometallurgischen Aufarbeitung von Zink enthaltenden Rohmaterialien, in welchen Zink ferritisch gebunden ist, bei welchem in einer ersten Verfahrensstufe das zerkleinerte zinkhältige Material einer sauren Laugung mit Schwefelsäure unterworfen wird, hierauf die Feststoffe, insbesondere die Niederschläge abgetrennt werden, und Cu und Cd aus der flüssigen Phase abgetrennt werden. Für die Aufarbeitung zinkhältiger Materialien sind in erster Linie pyrometallurgische Verfahren bekannt geworden. Derartige pyrometallurgische Verfahren sind aber nun für die Aufarbeitung großer Mengen zinkhältiger Materialien wirtschaftlich interessant. Insbesondere für die Aufarbeitung von Stäuben und Schlämmen, beispielsweise aus dem Hochofenprozeß, und für die Aufarbeitung zinkhältiger Abfallstoffe besteht das Bedürfnis einfache Verfahren zu schaffen, mit welchen die in der Regel wesentlich geringeren Mengen an Abfallstoffen wirtschaftlich aufgearbeitet werden können. Zum anderen sind pyrometallurgische Verfahren in hohem Maße energieabhängig und es ist daher Ziel der Erfindung, ein Verfahren der eingangs genannten Art zu schaffen, mit welchem zinkhältige Stäube und Schlämme, sowie andere zinkhältige mineralische Rohstoffe in einfacher Weise und auch bei Aufarbeitung geringer Mengen wirtschaftlich aufgearbeitet werden können und insbesondere das enthaltende Zink, sowie gegebenenfalls andere Elemente des aufzuarbeitenden Rohmaterials rein dargestellt werden können.

Die Erfindung geht von hydrometallurgischen Verfahren der eingangs genannten Art, wie sie beispielsweise der US-PS 3 464 814 entnommen werden können, aus. Bei einer weiters bekannten Verfahrensweise (DE-AS 1 948 411) wird der sauren Lösung Ammoniak zugesetzt, wobei sich ein hoher Ammoniakverbrauch ergibt. Bei diesem bekannten Verfahren wird jedoch ausschließlich in saurem Milieu gearbeitet und ebenso wie bei dem Verfahren nach der DE-OS 2 702 779, bei welchem eine flüssige Extraktion aus dem sauren Milieu erfolgt, können auf diese Weise eine Reihe von Verunreinigungen nicht ausgefällt werden, welche erst nach einer Neutralisation oder im basischen Bereich ausfallen.

Die Erfindung zielt nun darauf ab, ein naßchemisches Verfahren der eingangs genannten Art zu schaffen, bei welchem ein weiter Bereich möglicher Verunreinigungen mit Sicherheit erfaßt wird und eine wirtschaftliche Aufarbeitung von Zink enthaltenden Materialien auch bei geringen Mengen an Abfall- bzw. Rohstoffen gewährleistet ist. Zur Lösung dieser Aufgabe ist die Erfindung im wesentlichen dadurch gekennzeichnet, daß die flüssige Phase nach dem Abtrennen von Cu und Cd neutralisiert und so stark basisch gemacht wird, daß Zn als Zn(OH)$_4$ in Lösung verbleibt, wobei spätestens nach Erreichen eines pH-Wertes von etwa 8, Ammonchlorid zugesetzt wird und das als Zn(OH)$_4$ in der Lösung verbleibende Zink von den Feststoffen bzw. Niederschlägen getrennt und einem Ionenaustausch und/oder Lösungsmittelextraktionsverfahren und gegebenenfalls einer elektrolytischen Reinigung unterworfen wird. Durch die saure Laugung wird das ferritisch gebundene Zink gelöst und durch die Trennung der verbleibenden unlöslichen Anteile kann in erster Linie SiO$_2$, Pb und Barium ausgebracht werden. Die nachfolgende Abtrennung von Cu und Cd erfolgt in vorteilhafter Weise in saurem Milieu durch Zusatz von Zinkstaub, wobei Cu und Cd zementiert wird. In der Folge wird neutralisiert, wobei Ammonchlorid vor Erreichen eines pH-Wertes von etwa 8 zugesetzt wird, um auch Aluminium sicher auszufällen. In der, in der Folge stark basisch gemachten flüssigen Phase befinden sich in erster Linie Zink als Zinkat, wobei Eisen, vor allem als Sulfat oder Oxydhydrat, Mn, Cr, Al, Ca, Mg, Ni und Co abgetrennt werden können. Diese abgetrennten Niederschläge können in konventioneller Weise, beispielsweise einer Flotation zugeführt werden und gesondert aufgearbeitet werden. Das in Lösung verbliebene Zinkat kann beispielsweise an einem Anionenaustauscher absorbiert, und bei pH 2 bis 11 wieder extrahiert werden. Ebenso sind Lösungsmittelextraktionsverfahren für die Gewinnung von Zink anwendbar. Gegebenenfalls kann das Zink aus dem zinkhältigen Konzentrat elektrolytisch abgeschieden werden.

In vorteilhafter Weise wird die saure Laugung bei Temperaturen von über 60 °C, vorzugsweise bei etwa 95 °C, vorgenommen.

Die Neutralisation wird in vorteilhafter Weise mit NaOH in Überschuß vorgenommen, wobei der NaOH-Lösung bereits NH$_4$Cl in einer Menge vom doppelten der Rohstoffeinsatzmenge zugesetzt ist. Die Lösung muß so stark basisch gemacht werden, daß Zink sicher als Zn(OH)$_4$ in Lösung bleibt.

Die Erfindung wird nachfolgend an Hand eines Ausführungsbeispieles näher erläutert. Es wurde ein ZnFe$_2$OH$_4$ enthaltendes Material mit folgender Analyse eingesetzt :

| | |
|---|---|
| Fe | 17,4 % |
| Zn | 20,9 % |
| Pb | 3,7 % |
| Ca | 1,8 % |
| Al$_2$O$_3$ | 7,7 % |
| SiO$_2$ | 25,58 % |

Glühverlust : 9.04 %.

Es wurde 50 g dieses Materials eingesetzt.

Bei einer Temperatur von 95 °C wurde in 50 g einer 50 %igen Schwefelsäure zehn Stunden lang gelaugt. In der nachfolgenden Fest-Flüssig-Trennung wurden 22,3 g Rückstand, 75,8 g Filtrat mit einer Filtratanalyse :

| | |
|---|---|
| Fe | 8,65 % |
| Zn | 20,52 % |

| Pb | 0,02 % |
| Ca | 0,59 % |

erhalten. Die Neutralisation erfolgte in zwei Stufen, wobei in der 1. Stufe 40 g 50 %ige NaOH und in der zweiten Stufe 10 g NaOH fest zugesetzt wurde. Bereits in der ersten Stufe wurden 100 g NH₄Cl zugesetzt. Der gebildete Hydroxiniederschlag enthielt 0,5 g Al(OH)₃. Im Filtrat wurden 20,47 g Zn = 97,9 % Ausbringen, gefunden.

Das Zink wurde durch einen Ionenaustausch in einem Anionenaustauscher und nachfolgende Extraktion angereichert und gereinigt, worauf eine elektrolytische Abscheidung des gelösten Zinkes erfolgte.

### Ansprüche

1. Verfahren zur hydrometallurgischen Aufarbeitung von Zink enthaltenden Rohmaterialien, in welchen Zink ferritisch gebunden ist, bei welchem in einer ersten Verfahrensstufe das zerkleinerte zinkhältige Material einer sauren Laugung mit Schwefelsäure unterworfen wird, hierauf die Feststoffe insbesondere die Niederschläge abgetrennt werden, und Cu und Cd aus der flüssigen Phase abgetrennt werden, dadurch gekennzeichnet, daß die flüssige Phase nach dem Abtrennen von Cu und Cd neutralisiert und so stark basisch gemacht wird, daß Zn als Zn(OH)₄ in Lösung verbleibt, wobei spätestens nach Erreichen eines pH-Wertes von etwa 8, Ammonchlorid zugesetzt wird und das als Zn(OH)₄ in der Lösung verbleibende Zink von den Feststoffen bzw. Niederschlägen getrennt und einem Ionenaustausch und/oder Lösungsmittelextraktionsverfahren und gegebenenfalls einer elektrolytischen Reinigung unterworfen wird.

2. Verfahren nach Anspruch 1, dadurch gekennzeichnet, daß die saure Laugung bei Temperaturen von über 60°, vorzugsweise bei etwa 95 °C, vorgenommen wird.

3. Verfahren nach Anspruch 1 oder 2, dadurch gekennzeichnet, daß die flüssige Phase mit NaOH neutralisiert und stark basisch gemacht wird.

### Claims

1. Process for the hydrometallurgical treatment of materials that contain zinc being ferritically bonded, in which in a first step the disintegrated zinciferous material is subjected to acid leaching with sulfuric acid, wherupon the solid matters, in particular precipitates, are separated, and Cu and Cd are separated from the liquid phase, characterized in that after separation of Cu and Cd the liquid phase is being neutralized and made basic to an extent that Zn stays in solution as Zn(OH)₄, wherein after reaching a pH of approximately 8 at the latest ammonium chloride is added and the zinc remaining in the solution as Zn(OH)₄ is separated from the solid matters and precipitates, resp., and is subjected to ion exchange and/or a solvent extraction process and optionally electrolytic purification.

2. A process as claimed in claim 1, characterized in that the acid leaching is carried out at temperatures above 60°, preferably at approximately 95 °C.

3. A process as claimed in claim 1 or 2, characterized in that the liquid phase is neutralized with NaOH and made strongly basic.

### Revendications

1. Procédé hydrométallurgique de traitement de matières zincifères dans lesquelles le zinc est lié sous forme de ferrite, dans lequel dans un premier stade, la matière zincifère broyée est soumise à une lixiviation acide par l'acide sulfurique, après quoi les substances solides, en particulier les précipités, sont séparées, et Cu et Cd sont séparés de la phase liquide, caractérisé en ce que la phase liquide est neutralisée après la séparation de Cu et Cd et alcalinisée de telle sorte que Zn reste en solution sous forme de Zn(OH)₄, du chlorure d'ammonium étant ajouté au plus tard après l'obtention d'un pH d'environ 8, et le zinc restant dans la solution étant séparé des substances solides ou précipités et soumis à un processus d'échange d'ions et/ou d'extraction par des solvants et le cas échéant à une purification électrolytique.

2. Procédé suivant la revendication 1, caractérisé en ce que la lixiviation acide est effectuée à une température supérieure à 60 °C, de préférence à 95 °C environ.

3. Procédé suivant la revendication 1 ou 2, caractérisé en ce que la phase liquide est neutralisée par NaOH et est rendue fortement basique.